# EUROPEAN PATENT APPLICATION

(11) **EP 1 179 628 A1**
(43) Date of publication of application: **13.02.2002**
(21) Application number: 00962985.8
(22) Date of filing: 29.09.2000
(51) Int. Cl.: D06N 3/06, B32B 27/20, C08J 5/18, B62J 1/18

(54) **SKIN OF SHEET FOR VEHICLE**

(30) Priority: 19.10.1999 JP 29744199
(71) Applicant: Honda Giken Kogyo Kabushiki Kaisha, Minato-ku, Tokyo 107-8556 (JP); OKAMOTO INDUSTRIES, INC., Bunkyo-ku Tokyo 113 (JP); TS Tech Co., Ltd, Asaka-shi, Saitama 351-0012 (JP)
(72) Inventor: TANAKA, Tetsuharu, Wako-shi Saitama 351-0193 (JP); KOGA, Miyako, Wako-shi Saitama 351-0193 (JP); MORI, Toshimasa Shizuoka Works Okamoto Ind., Inc., Haibara-gun Shizuoka 421-0304 (JP); CHIBA, Tomohisa, Asaka-shi Saitama 351-0012 (JP)
(74) Representative: Taliercio, Antonio
(86) International application number: JP0006778
(87) International publication number: WO0129307

(57) **Abstract**

A skin of a seat for a vehicle includes a skin body made of a synthetic resin, and an infrared-ray reflective pigment dispersed in the skin body. Thus, the skin of the seat is not heated to a hot state, even if it is left to stand under the blazing sun.

## Description

### FIELD OF THE INVENTION

The present invention relates to a skin of a seat for a vehicle.

### BACKGROUND ART

A black skin of a seat, for example, for a two-wheeled motor vehicle, is conventionally popular from the viewpoint of design. The skin is comprised of a skin body made of a synthetic resin, e.g., polyvinyl chloride composition, and carbon black as a black pigment dispersed in the skin body.

The conventional black skin has the advantage that it is inexpensive and stable in physical properties. However, when the two-wheeled motor vehicle is left to stand under the blazing sun, it is inevitable that the black skin will be heated to a hot state by infrared rays absorbed by the carbon black.

### DISCLOSURE OF THE INVENTION

It is an object of the present invention to provide a skin of a seat for a vehicle, which is of the above-described type, and which is not heated to a hot state, even if it is left to stand under the blazing sun.

To achieve the above object, according to the present invention, there is provided a skin of a seat for a vehicle, comprising a skin body made of a synthetic resin, and an infrared-ray reflective pigment dispersed in the skin body.

With the above arrangement, a rise in temperature of the skin is inhibited by the infrared-ray reflective pigment. Therefore, the skin is not heated into a hot state even under the blazing sun.

To achieve such inhibition of the rise in temperature of the skin, if the amount of synthetic resin mixed to form the skin body is defined as 100 parts, the amount of infrared-ray reflective pigment mixed is set at 0.3 parts or more. In this case, if the amount of infrared-ray reflective pigment mixed is lower than 0.3 parts, the intended purpose cannot be achieved. On the other hand, if the amount of infrared-ray reflective pigment mixed exceeds 10 parts, a disadvantage of a plate-out in a producing step will arise. Therefore, an upper limit of the amount of pigment mixed is set at 10 parts.

When the skin of the seat has a roughened surface having a plurality of recesses and projections, the sense of a human's skin feeling hot becomes duller than that when the skin of the seat has a flat surface. Therefore, the surface of the skin is formed into a roughened surface having a plurality of recesses and projections dispersed therein. In this case, it is desirable that the height of the projections in the recesses and projections is in a range from 0.05 mm (inclusive) to 0.35 mm (inclusive). However, if the height is less than 0.05 mm, the above-described effect cannot be achieved. On the other hand, if the height exceeds 0.35 mm, there arise disadvantages that see-through portions are created, or dusts or the like are liable to be accumulated in the recesses, particularly when the skin is thin in total thickness. Examples of the skin having such surface include a skin whose surface is formed into a sueded fashion.

In addition, the skin body is made of one of a polyvinyl chloride composition and a foamed polyvinyl chloride composition, for example.

Another embodiment of a skin is of a two-layer structure comprising an upper layer and a lower layer affixed to the upper layer. In this case, the upper layer has an upper layer body made of a synthetic resin, and an infrared-ray reflective pigment dispersed in the upper layer body. The lower layer has a lower layer body made of a synthetic resin, and carbon black dispersed in the lower layer body. The upper layer in such embodiment corresponds to a skin having the above-described single layer structure and hence, various requirements as described above and pertaining to the above-described skin are also applied to the upper layer.

If the skin is formed into the two-layer structure, the upper layer can be thinned, and the amount of the infrared-ray reflective pigment used causing an increase in cost can be reduced.

### BRIEF DESCRIPTION OF THE DRAWINGS

Fig.1 is a sectional view of an embodiment of a skin.
Fig.2 is a sectional view of another embodiment of a skin.

### BEST MODE FOR CARRYING OUT THE INVENTION

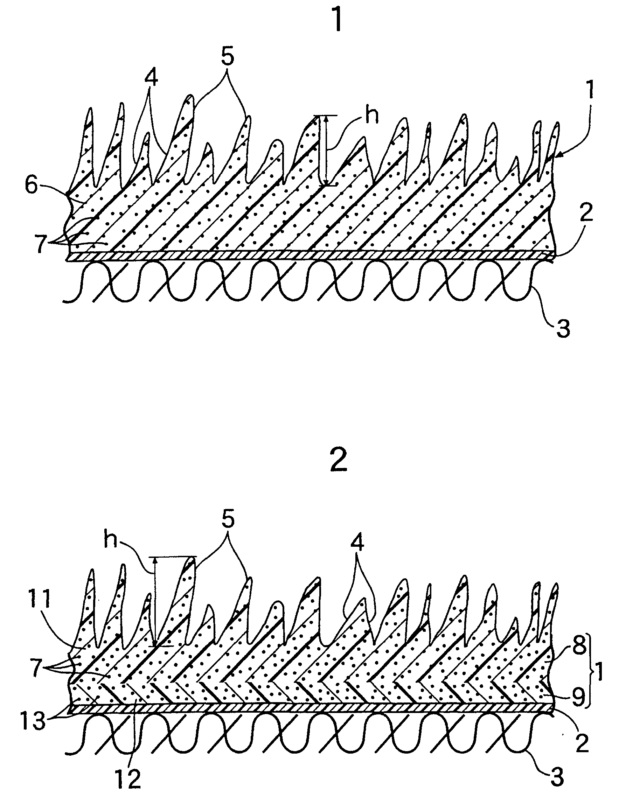

Referring to Fig.1, a skin 1 used in a seat of a two-wheeled motor vehicle as a vehicle has a base knitted-fabric 3 affixed to its back with an adhesive layer 2 interposed therebetween. The surface of the skin 1 is formed into a sueded fashion and hence, is a roughened surface having a plurality of recesses 4 and a plurality of projections 5. The height h of the projections 5 is in a range from 0.05 mm (inclusive) to 0.2 mm (inclusive).

The skin 1 includes a skin body 6 made of a polyvinyl chloride composition, and a black infrared-ray reflective pigment 7 dispersed in the skin body 6.

The polyvinyl chloride composition comprises a blend comprising components, which will be described below. The blend is a reinforcing blend intended to protect the infrared-ray reflective pigment. Meanwhile, in the polyvinyl chloride composition, the term "part" means "a part by weight" and likewise hereinafter.

| | |
|---|---|
| Resin component (polyvinyl chloride) | 100 parts |
| Phthalate plasticizer (wherein phthalate was made using an alcohol having 10 to 14 carbon atoms) | 72 parts |
| Phosphate-based plasticizer (TCP) | 7 parts |
| Ba-Zn based stabilizer | 3 parts |
| Amine-based stabilizer | 0.4 parts |

The black infrared-ray reflective pigment 7 used is Paliogen Black (registered trademark) L0084 made by BASF, Co., and the amount of pigment mixed is set at one part per 100 parts of the polyvinyl chloride.

For comparison, a skin having a flat surface and a conventional structure was selected. This skin has a base knitted-fabric affixed to its back with an adhesive layer interposed therebetween, likewise as described above. A polyvinyl chloride composition for forming the skin comprises a usual blend having the following components:

| | |
|---|---|
| Resin component (polyvinyl chloride) | 100 parts |
| Phthalate plasticizer (DOP) | 80 parts |
| Ba-Zn based stabilizer | 3 parts |

The pigment used is carbon black. The amount of carbon black mixed is set at 0.5 parts per 100 parts of the polyvinyl chloride.

The skin 1 according to the embodiment and the skin in the comparative example were subjected to the following heating test: Using an incandescent lamp, light was applied to the surface of each of the skins from a location corresponding to a height of 180 mm, and the temperature of the surface was measured by a thermo-viewer. When the temperature of the surface in the comparative example reached 90°C, the temperature of the surface in the embodiment was measured, and the result showed 59.7°C. Under the blazing sun showing an open-air temperature of 37°C, the highest temperature of the surface in the comparative example reached 78.9°C, but that in the embodiment was 60.3°C. In any case, it was found that when the experimenter touched the surfaces in the embodiment with his or her hand, he or she did not feel hot, but when he or she touched the surfaces in the comparative example with his or her hand, he or she felt very hot. From the foregoing, an effect provided by the infrared-ray reflective pigment 7 was confirmed.

Fig.2 shows another embodiment. In this embodiment, a skin 1 comprises an upper layer 8, and a lower layer 9 affixed to the upper layer 8 by heat. A base knitted-fabric 3 is affixed to a back of the lower layer 9 with an adhesive layer 2 interposed therebetween. The upper layer 8 has an upper layer body 11 made of a synthetic resin, and an infrared-ray reflective pigment 7 dispersed in the upper layer body 11. The lower layer 9 has a lower layer body 12 made of a synthetic resin, and carbon black 13 dispersed in the lower layer body 12. The particular structure of the upper layer 8 is, for example, the same as that of the skin 1 in the previous embodiment shown in Fig.1, and the particular structure of the lower layer 9 is, for example, the same as that of the skin in the above-described comparative example.

The polyvinyl chloride may be a foamed product, and woolly-nylon fabric or the like may be used as a base fabric. Further, an infrared reflective pigment may be dispersed in each of the upper and lower layers to produce a thick skin.

### INDUSTRIAL APPLICABILITY

The skin of the seat for vehicle according to the present invention is applicable to a two-wheeled motor vehicle and further to another vehicle, e.g., a bus, a truck or an automobile.

## Claims

1. A skin of a seat for a vehicle, comprising a skin body (1) made of a synthetic resin, and an infrared-ray reflective pigment (7) dispersed in said skin body (1).

2. A skin of a seat for a vehicle according to claim 1, wherein when the amount of synthetic resin mixed for forming the skin body (1) is defined as 100 parts, the amount of infrared-ray reflective pigment (7) mixed is in a range from 0.3 parts (inclusive) to 10 parts (inclusive).

3. A skin of a seat for a vehicle according to claim 1 or 2, wherein the surface of said skin is a roughened surface having pluralities of recesses and projections (4, 5).

4. A skin of a seat for a vehicle according to claim 3, wherein the height h of the projections (5) in said recesses and projections (4, 5) is of 0.05 mm or more.

5. A skin of a seat for a vehicle according to claim 1, 2, 3 or 4, wherein said skin body (6) is made of one of a polyvinyl chloride composition and a foamed polyvinyl chloride composition.

6. A skin of a seat for a vehicle, comprising an upper layer (8) and a lower layer (9) affixed to said upper layer (8), said upper layer (8) having an upper layer body (11) made of a synthetic resin, and an infrared-ray reflective pigment (7) dispersed in said upper layer body (11), said lower layer (9) having a lower layer body (12) made of a synthetic resin, and carbon black (13) dispersed in said lower layer body (12).

7. A skin of a seat for a vehicle according to claim 6, wherein when the amount of synthetic resin mixed for forming said upper layer body (11) is defined as 100 parts, the amount of infrared-ray reflective pigment (7) is in a range from 0.3 parts (inclusive) to 10 parts (inclusive).

8. A skin of a seat for a vehicle according to claim 6 or 7, wherein the surface of said upper layer (8) is a roughened surface having pluralities of recesses and projections (4, 5).

9. A skin of a seat for a vehicle according to claim 8, wherein the height (h) of the projections (5) in said recesses and projections (4, 5) is of 0.05 mm or more.

10. A skin of a seat for a vehicle according to claim 6, 7, 8 or 9, wherein said upper layer body (11) is made of one of a polyvinyl chloride composition and a foamed polyvinyl chloride composition.
